# EUROPEAN PATENT APPLICATION

(11) **EP 4 654 673 A2**
(43) Date of publication of application: **26.11.2025**
(21) Application number: 25177895.7
(22) Date of filing: 21.05.2025
(51) Int. Cl.: H04W 48/16

(54) **SYSTEMS AND METHODS FOR IMPROVING ACCESS POINT DISCOVERY WITH DYNAMIC DWELL TIME**

(30) Priority: 23.05.2024 US 202463651275 P; 12.08.2024 US 202463682247 P; 30.10.2024 US 202418931327
(71) Applicant: Avago Technologies International Sales Pte. Limited, Singapore 768923 (SG)
(72) Inventor: Tadahal, Shivkumar Basavaraj, Irvine, 92618 (US); Raveendranath Kamath, Manoj, Irvine, 92618 (US); Somaraju, Dasam, Irvine, 92618 (US); Jance, Jithu, Irvine, 92618 (US); Fischer, Matthew J., Irvine, 92618 (US)
(74) Representative: Dilg, Haeusler, Schindelmann Patentanwaltsgesellschaft mbH

(57) **Abstract**

The disclosure describes systems and methods for improving access point discovery with dynamic dwell time. A station (215) can transmit a probe request to be received by an access point (205). The probe request can identify a scan dwell time of the station (215). While waiting for the probe response during the scan dwell time, the station (215) can determine that the probe response from the access point (205) has yet to be received at a point during the scan dwell time. Responsive to the determination, the station (215) can dynamically increase the scan dwell time while waiting for the probe response from the access point (205). The access point (205) can receive the probe request and determine whether to respond within the scan dwell time. The access point (205) can identify a relevant metric of time and generate the probe response. The access point (205) can transmit the probe response to the station (215) within the scan dwell time.

## Description

### CROSS-REFERENCE TO RELATED APPLICATIONS

This application claims the benefit of priority to U.S. Provisional Application No. 63/682,247, filed August 12, 2024, and claims the benefit of priority to U.S. Provisional Application No. 63/651,275, filed May 23, 2024, the entirety of each of which is incorporated by reference herein.

### FIELD OF THE DISCLOSURE

This disclosure generally relates to systems and methods for wireless communication between access points and wireless communication devices, including, without limitation, improving access point discovery with dynamic dwell time.

### BACKGROUND

The market for wireless communications devices has been growing due to increased use of portable devices, increased connectivity, and data transfer between all manners of devices. Digital switching techniques have facilitated the large-scale deployment of affordable, easy-to-use wireless communication networks. Wireless communication can operate in accordance with various standards, such as the IEEE 802.11x (e.g., Wi-Fi technology), Bluetooth, global system for mobile communications (GSM), and code division multiple access (CDMA). Using such technologies, wireless communication devices can connect to local area networks and the internet without physical cables, communicating over radio frequencies and across various spaces and ranges.

### SUMMARY

The technical solutions of the present disclosure are directed to improving access point discovery with dynamic dwell time. In a wireless local area network (WLAN), access points and client devices can communicate wirelessly within localized areas such as homes, offices, or campuses. WLANs can support a variety of applications, ranging from basic web browsing to real-time communication and entertainment services, such as audio/video conferencing and online gaming. These applications require not only efficient data transmission but also timely delivery of data packets to ensure seamless user experiences. In dense WLAN environments, non-AP stations (STAs) can often struggle to discover available access points (APs) within the limited scan dwell time, leading to inefficient network connectivity. This challenge can arise primarily due to factors such as overlapping basic service sets (BSSs), which can cause interference and congestion as multiple WLAN networks operate on shared channels. High levels of channel congestion can make it difficult for STAs to receive beacon or probe responses within the allotted time. Additionally, in some cases, access points may prioritize other tasks over responding to probe requests, leading to delays in response times. As a result, even in environments with lower congestion, this can result in STAs experiencing delays in receiving responses. Furthermore, the restricted scan dwell time can limit the amount of time STAs spend scanning for APs. As a result, STAs can experience delayed connectivity, particularly in areas with high AP density, leading to roaming issues and frequent switching between APs, which can cause dropped connections and service disruptions. Similarly, the network performance can degrade due to interference and congestion, reducing data throughput.

The technical solutions disclosed herein can overcome the challenges of inefficient access point discovery, limited scan dwell time, channel congestion, overlapping BSSs, and degraded network performance in dense WLAN environments. The technical solution can include changes on the STA and AP sides. For example, on the STA side, a special proprietary element can be added that includes fields such as the scan dwell time (SDT) on the specified channel and the priority of the probe request. The priority can be classified into different values: low priority for initial unassociated scans or discovery, normal priority for regular roam scans or background-associated scans, and high priority for final roaming scan cases. On the AP side, the access point can use the information from the STA's SDT and priority to determine how to manage the probe request. For example, the AP can prioritize the probe response and/or beacon frame to provide reliable delivery within the STA's SDT, or if network congestion prevents timely scheduling of the probe response, the AP can defer the response indefinitely to avoid wasting airtime. In some cases, the AP can use the access category for voice (AC-VO) to prioritize the probe response, beacon frame, or certain types of traffic.

The technical solutions can include additional enhancements to the AP's management of probe requests. For example, an AP can include the average response time for a STA's probe request as part of a proprietary element in beacon and probe response frames, referred to as the average response time for probe request (ART-PReq). The AP can also include the ART-PReq value in the reduced neighbor report (RnR) element for all collocated APs. The AP can also provide information on channel congestion (CC) or channel utilization (CU) for all collocated APs within the RnR element. The non-AP STA can utilize the CC, CU, or ART-PReq value from the AP via the RnR or beacon to make informed decisions, such as adjusting the dwell time when scanning for a collocated AP on its channel or discovering the collocated AP through multi-link (ML) probing if the AP is multi-link operation (MLO) capable. The configuration can be useful when the collocated AP's response time or CU is poor, allowing the STA to use the reporting AP's ART-PReq to modify dwell time during ML probing for improved network performance. The technical solutions, as described herein, can be extended to future standards such as 802.11bn (UHR/Wi-Fi 8) specifications.

Similarly, the technical solutions can include an AP providing an average response time metric for additional frames, such as authentication (ART-AuthReq) and (re)association (ART-AssocReq) frames. This metric can be used by the STA to fine-tune the channel dwell time during authentication and association. Additionally, the configuration can be extended to action frames such as add block acknowledgment (ADDBA)-Request/Response and ART-ActionReq, allowing the STA to further enhance its dwell time and improve the overall network performance during these interactions.

Furthermore, the technical solutions can allow the STA to dynamically increase its scan dwell time based on localized interference. For example, if the STA does not receive a response from the AP after half of the scan dwell time has elapsed and determines that channel congestion is high (e.g., due to energy detection (ED) or overlapping basic service set (OBSS) frames), the STA can dynamically increase the scan dwell time to account for delays in probe response delivery. Additionally, the AP can reduce unnecessary probe response delivery by detecting and ignoring duplicate probe requests. If the AP has already queued a response to a previous request, the AP can avoid responding to new probe requests until the previously generated response has been processed. The technical solutions disclosed herein can enhance access point discovery and overall network efficiency.

At least one aspect of the technical solutions is directed to a system of improving access point discovery with dynamic dwell time. The system can include a station. The station can include one or more processors coupled to memory. The one or more processors can generate a probe request for access point discovery. The probe request can identify a scan dwell time of the station and a priority. The one or more processors can transmit the probe request to be received by an access point. The one or more processors can receive from the access point a probe response. The probe response can identify a metric including a time that the access point responds to probe requests. Responsive to the probe response, the one or more processors can adjust the scan dwell time of the station for subsequent probe requests.

In some embodiments, the access point can respond to the probe request within the identified scan dwell time based, at least, on the priority of the probe request. In some embodiments, the metric can include an average response time for the access point to respond to the probe requests. In some embodiments, the probe request can include a field identifying the metric. In some embodiments, the field can include a customized field or a standard-defined field. The metric can include at least the scan dwell time or a priority value, where the priority value includes at least one of a low priority value, a normal priority value, or a high priority value. In some embodiments, the one or more processors can adjust the scan dwell time based at least on the metric. The metric can include at least one of channel congestion, channel utilization, or an average response time for the probe requests. In some embodiments, the access point can be a collocated access point. In some embodiments, the one or more processors can receive the metric via a reduced neighbor report of the collocated access point.

In some embodiments, the one or more processors can scan the collocated access point based at least on the average response time for probe requests of the collocated access point or the congestion metric obtained from the reduced neighbor report, or scan the collocated access point using multi-link probing. In some embodiments, the one or more processors can adjust the dwell time for at least one of an authentication request, an association request, a reassociation request, or an add block acknowledgement (ADDBA) request based on an average response time for a corresponding request provided by the access point.

Another aspect of the technical solutions is directed to a system of improving access point discovery with dynamic dwell time. The system can include a station. The station can include one or more processors coupled to memory. The one or more processors can transmit a probe request to be received by an access point. The station can include a scan dwell time to wait for a probe response. While waiting for the probe response during the scan dwell time, the one or more processors can determine that a probe response from the access point has yet to be received at a point during the scan dwell time. The one or more processors can dynamically increase, responsive to the determination, the scan dwell time while waiting for the probe response from the access point.

In some embodiments, the one or more processors can dynamically increase the scan dwell time based, at least, on a metric received from the access point. The metric can include at least one of channel congestion, channel utilization, or an average response time for probe requests. In some embodiments, the one or more processors can dynamically increase the scan dwell time based, at least, on localized interference. The localized interference can include, at least, one of an energy detection frame or an overlapping basic service set frame.

Another aspect of the technical solutions is directed to a system of improving access point discovery with dynamic dwell time. The system can include an access point. The access point can include one or more processors coupled to memory. The one or more processors can receive a probe request from a station. The probe request can identify a scan dwell time of the station and a priority. The one or more processors can determine to respond to the probe request within the scan dwell time based at least on the priority. The one or more processors can identify one or more of a metric of time for the access point to respond to probe requests, where the metric of time can be determined based at least on channel congestion or channel utilization. The one or more processors can generate a probe response including one or more of the metric of time for the access point to respond to probe requests. The one or more processors can transmit the probe response within the scan dwell time.

In some embodiments, the one or more processors can suspend transmission of the probe response upon determining that the probe response cannot be scheduled within the scan dwell time. In some embodiments, the one or more processors can transmit the probe response to the station via a second access point associated with the station, where the second access point can be identified based on a basic service set identifier included in the probe request. In some embodiments, the metric can further include an average response time for at least one of an authentication request, an association request, a reassociation request, or an add block acknowledgement (ADDBA) request from the station. In some embodiments, the one or more processors can transmit a reduced neighbor report to collocated access points, where the reduced neighbor report includes at least one of channel congestion or channel utilization.

Yet another aspect of the technical solutions is directed to a system of improving access point discovery with dynamic dwell time. The system can include an access point. The access point can include one or more processors coupled to memory. The one or more processors can receive a probe request from a station. The probe request can identify a scan dwell time of the station. The one or more processors can determine that the access point is unable to transmit a probe response within the scan dwell time of the station. The one or more processors can skip transmitting the probe response. The one or more processors can queue the probe request until the probe response until resolution of the probe request occurs. While the probe request is queued, the one or more processors can ignore duplicate probe requests from the station. In some embodiments, the one or more processors can detect duplicate probe requests from the station. In some embodiments, the one or more processors can be further configured to prioritize the probe response based on a priority value associated with the probe request, where the priority value can include at least one of a low priority value, a normal priority value, or a high priority value.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A illustrates a block diagram depicting a network environment including one or more access points in communication with one or more devices or stations, in accordance with one or more embodiments.
FIGS. 1B and 1C illustrate block diagrams depicting computing devices useful in connection with the methods and systems described herein, in accordance with one or more embodiments.
FIG. 2 illustrates a block diagram of an example system for improving access point discovery with dynamic dwell time, in accordance with one or more embodiments.
FIG. 3 illustrates an example flow diagram of a method for improving access point discovery with dynamic dwell time, in accordance with one or more embodiments.
FIGS. 4-6 illustrate example implementations of access point discovery, in accordance with one or more embodiments.
FIG. 7 illustrates another example flow diagram of a method for improving access point discovery with dynamic dwell time, in accordance with one or more embodiments.
FIGS. 8-11 illustrate another example implementations of access point discovery, in accordance with one or more embodiments.

### DETAILED DESCRIPTION

The following IEEE standard(s), including any draft versions of such standard(s), are hereby incorporated herein by reference in their entirety and are made part of the present disclosure for all these purposes: WiFi Alliance standards and IEEE 802.11 standards, including but not limited to IEEE 802.11a^{™}, IEEE 802.11b^{™}, IEEE 802.11g^{™}, IEEE P802.11n^{™}; IEEE P802.11ac^{TM}; and IEEE P802.11be^{™} through IEEE P802.11bn^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment that can be useful for practicing embodiments described herein; and
- Section B describes systems and methods for improving access point discovery with dynamic dwell time.

### A. Computing and Network Environment

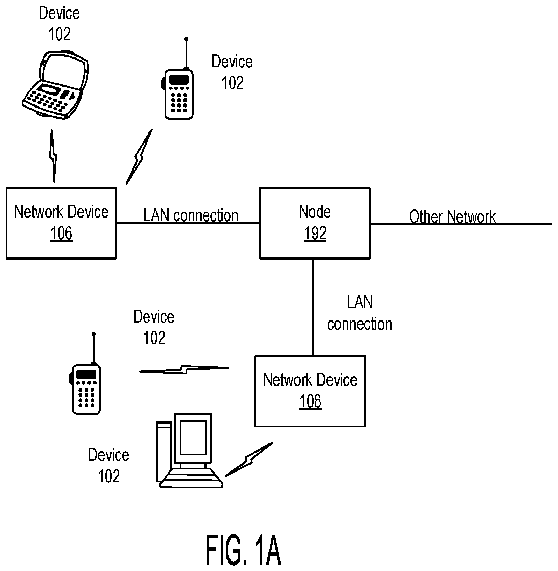

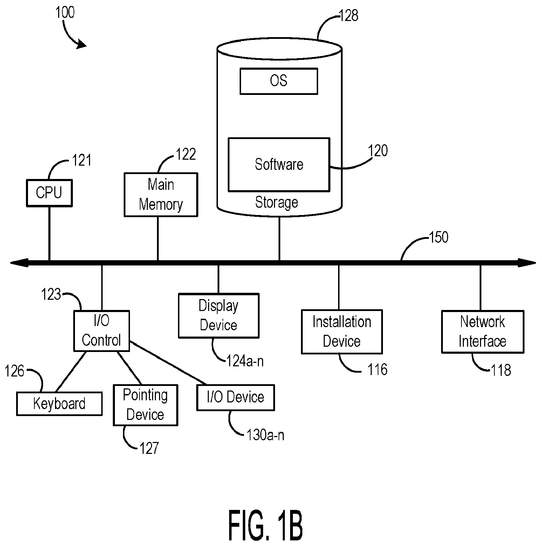

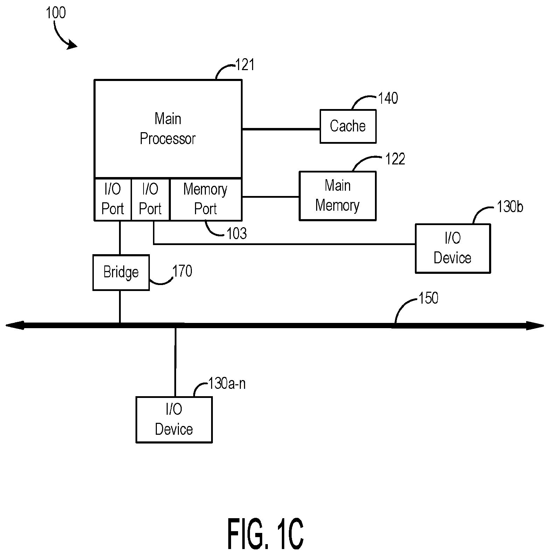

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using Wi-Fi or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other communication devices 102 to utilize that wired connection. A network device 106 or AP can be implemented to support a standard for sending and receiving data using one or more radio frequencies. Those standards and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency-based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an input/output (I/O) controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more I/O devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above-described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with the main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screens, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, a USB device, a hard drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect, or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smartphone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Systems and Methods for Improving Access Point Discovery with Dynamic Dwell Time

Below are detailed descriptions of various concepts related to, and embodiments of, techniques, approaches, methods, apparatuses, and systems for improving access point discovery with dynamic dwell time. The various concepts introduced above and discussed in greater detail below may be implemented in any of numerous ways, as the described concepts are not limited to any particular manner of implementation. Examples of specific embodiments and applications are provided primarily for illustrative purposes.

The technical solutions disclosed herein can address challenges such as inefficient access point (AP) discovery, limited scan dwell time, channel congestion, overlapping basic service sets (BSSs), and degraded network performance in dense wireless local area network (WLAN) environments. On the non-AP station (STA) side, a customized field or a standard-defined field can be added to probe requests, identifying the scan dwell time (SDT) and priority, with classifications ranging from low to high priority for different scanning configurations. On the AP side, the access point can prioritize probe responses based on the STA's SDT and priority, maintaining timely delivery or deferring the response if congestion prevents scheduling within the SDT. The AP can also use the access category for voice (AC-VO) to prioritize traffic. Further, the AP can include average response time metric (ART-PReq) in beacon or probe response frames and reduced neighbor report (RnR) elements, along with channel congestion (CC), and channel utilization (CU) information for collocated APs. The STA can leverage ART-PReq, CC, and CU data from the RnR or beacon to adjust dwell time or perform multi-link (ML) probing when scanning for collocated APs, for example, in cases of poor performance or high congestion. The technical solutions can be extended to future standards like 802.11bn (UHR/Wi-Fi 8). Additionally, the AP can provide the average response time metric for authentication (ART-AuthReq) and (re)association (ART-AssocReq) frames, facilitating the STA to fine-tune dwell time during these processes, and extend the adjustment to action frames such as ADDBA-Request/Response and ART-ActionReq. Moreover, the STA can dynamically increase its scan dwell time based on localized interference, such as energy detection (ED) or overlapping BSS (OBSS) frames, while the AP can detect and ignore duplicate probe requests to reduce unnecessary response delivery. Thus, the technical solutions disclosed herein can improve access point discovery and overall network efficiency.

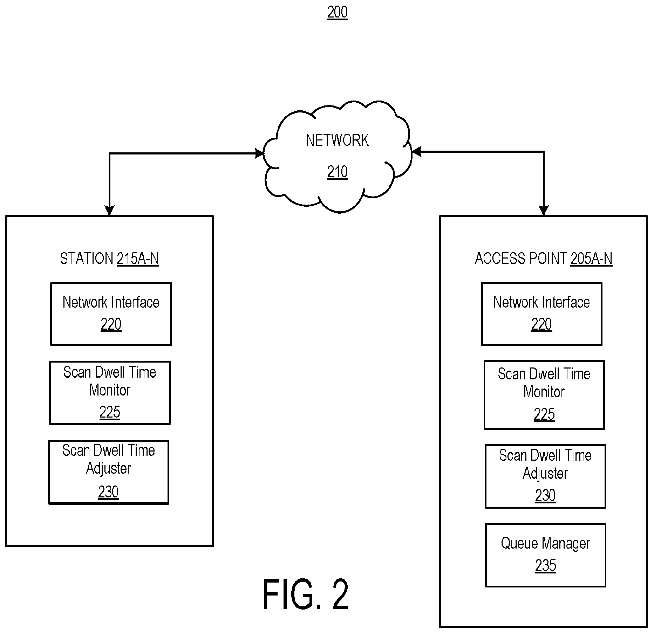

FIG. 2 illustrates an example system 200 for improving access point discovery with dynamic dwell time. Example system 200 can include one or more access points 205A-205N (sometimes referred to herein as an access point 205) communicatively coupled with one or more stations 215A-215N (sometimes referred to herein as a station 215) over one or more networks 210. Any of the systems described in connection with FIGS. 1A-1C can be configured, constructed, or implemented to implement, operate, and/or use any of the options and techniques described in FIG. 2.

The access point 205 can include a device, system, or module (including a combination of hardware and software) that allows wireless communication devices to connect to a wired network using Wi-Fi or other standards. The access point 205 can sometimes be referred to as a wireless access point (WAP). The access point 205 can include components, such as an antenna for transmitting and receiving wireless signals, a radio device for managing wireless communications, a CPU for processing data and control operations, and memory (DDR) for storing operational data and configurations. The access point 205 can be implemented (e.g., configured, designed, and/or built) for operating in a wireless local area network (WLAN). The access point 205 can connect to a router (e.g., via a wired network) as a standalone device in some embodiments. In some embodiments, the access point 205 can be a component of a router. The access point 205 can provide multiple devices with access to a network. The access point 205 can, for example, connect to a wired Ethernet connection and provide wireless connections using radio frequency links for other devices to utilize that wired connection. The access point 205 can be implemented to support a standard for sending and receiving data using one or more radio frequencies. Those standards, and the frequencies they use can be defined by the IEEE (e.g., IEEE 802.11 standards). The access point 205 can be configured and/or used to support Internet hotspots, and/or on a network to extend the network's Wi-Fi signal range.

The network 210 can include computer networks such as the Internet, local, wide, metro, or other area networks, intranets, satellite networks, other computer networks such as voice or data mobile phone communication networks, and combinations thereof. The network 210 may be any form of computer network that can relay information between the access point 205, the station 215, and one or more information sources, such as web servers or external databases, amongst others. The network 210 can include the Internet and/or other types of data networks, such as a local area network (LAN), a wide area network (WAN), a cellular network, a satellite network, or other types of data networks. The network 210 can include any number of computing devices (e.g., computers, servers, routers, network switches, etc.) that are configured to receive and/or transmit data within the network 210. The network 210 can include any number of hardwired and/or wireless connections. Any or all of the computing devices described herein can communicate wirelessly (e.g., via Wi-Fi, cellular, radio, etc.) with a transceiver that is hardwired (e.g., via a fiber optic cable, a CAT5 cable, etc.) to other computing devices in the network 210. Any or all of the computing devices described herein can communicate wirelessly with the computing devices of the network 210 via a proxy device (e.g., a router, network switch, or gateway).

The station 215 can be a wireless communication device configured for wireless communication in wireless communication networks, such as a LAN, WAN, or cellular network. The station 215 can be configured to communicate wirelessly with network devices, such as the access point 205, using any of the IEEE standards (e.g., IEEE 802.11 standards). The station 215 can be any of the user devices described in connection with FIGS. 1A-C. In some embodiments, the station 215 can include one or more wireless communication devices 102, as described in FIG. 1A, configured to receive services from a communication system.

In some embodiments, the access point 205 can include a network interface 220. The network interface 220 can be or include any script, file, program, application, set of instructions, or computer-executable code that is configured to manage the transmission and reception of probe requests and responses over the wireless network. The network interface 220 can include wireless radios, which can manage the transmission and reception of wireless signals, operating on specific frequencies (e.g., 2.4 GHz and 5 GHz) and supporting various Wi-Fi standards. In some embodiments, the network interface 220 can include an Ethernet port, which can provide a primary wired connection point, allowing the access point 205 to connect to a router or switch within the wired network. The network interface 220 can further include antenna(s), which can enhance the wireless signal strength and coverage area. The network interface 220 can include onboard processors and memory, which can manage data flow between wired and wireless networks, facilitate encryption and decryption, and run the firmware that controls the access point's functions. The network interface 220 can include firmware and a software interface, which can provide the operating system and configuration settings that allow administrators to manage the access point 205, set up security protocols, and improve performance.

In some embodiments, the network interface 220 of the access point 205 can receive a probe request. The network interface 220 can receive the probe request from the station 215. The probe request can identify a scan dwell time of the station 215 and the associated priority value. The scan dwell time refers to the duration that a station 215 or an access point 205 spends scanning a particular channel. The priority value can indicate the urgency of the request. In some embodiments, the priority value can include a low priority value (such as for an initial unassociated scan or discovery), a normal priority value (such as for a normal roaming scan or background-associated scan), or a high priority value (such as for final roaming scan cases where a connection is more urgent). The network interface 220 can listen for incoming signals. The network interface 220 can continuously monitor the radio frequency (RF) spectrum for signals matching the characteristics of a probe request. Upon detecting a signal, the network interface 220 can demodulate the signal to extract the data. The received data can be parsed to verify if it is a valid probe request by checking specific fields and values. If the probe request is valid, the network interface 220 can extract information, such as the MAC address, the desired SSID, the scan dwell time, and other relevant parameters. In some embodiments, based on the priority value, the network interface 220 of the access point 205 can prioritize the probe response.

In some embodiments, the network interface 220 of the access point 205 can generate the probe response. The probe response can include information such as the access point's basic service set identifier (BSSID), SSID, channel number, supported data rates, security details, and other relevant network parameters. The network interface 220 can incorporate one or more metrics, such as the average response time for probe requests. In some embodiments, the metrics can be determined based at least on channel congestion levels (e.g., multiple devices are trying to use the same channel simultaneously) or channel utilization data (e.g., how much of a wireless communication channel's capacity is being used at any given time). The metrics can refer to specific measurements or indicators used to evaluate the performance or quality of the wireless connection during the probing process. The probing process in wireless networks can be used by stations 215 to discover available access points 205 and networks and can include active and passive probing. In active probing, the station 215 can transmit probe requests on different channels. The access points 205 that receive these requests can respond with probe responses, providing information about the network, such as the SSID, supported data rates, and security settings, allowing the station 215 to quickly discover nearby networks. In passive probing, the station 215 can listen for beacon frames periodically broadcast by access points 205. After collecting and organizing the data, the network interface 220 can generate the probe response, including any customized fields or standard-defined fields, as desired. The network interface 220 can modulate the probe response data onto a carrier wave for transmission to the station.

In some embodiments, the network interface 220 of the access point 205 can determine whether a probe response can be transmitted within the scan dwell time. The network interface 220 can determine whether the probe response can be transmitted within the scan dwell time by evaluating various factors. For example, the network interface 220 can determine the priority of the probe request based on the supported data rates, giving higher priority to stations with data rates compatible with the access point's capabilities. The network interface 220 can evaluate signal strength using the received signal strength indicator (RSSI), prioritizing requests with stronger signals that typically indicate closer proximity. If the probe request includes a specific SSID that matches the access point's network, the network interface 220 can prioritize that request over generic or wildcard ones. In some embodiments, the network interface 220 can determine the priority based on the station's capabilities, such as support for specific Wi-Fi standards or security protocols (e.g., WPA3). In some embodiments, the network interface 220 can evaluate the current network load, prioritizing requests from stations 215 that are more likely to maintain a stable and efficient connection during periods of heavy load. In some embodiments, the network interface 220 can consider any quality of service (QoS) requirements indicated in the probe request, prioritizing requests that desire low latency or real-time performance.

In some embodiments, the network interface 220 of the access point 205 can identify metrics to evaluate the current network conditions and determine whether the access point 205 can respond to a probe request within the specified timeframe. The metrics can include several factors, such as channel congestion, interference, and overall network load, which can be used to evaluate the network's performance and availability. In some embodiments, the network interface 220 can evaluate specific metrics, such as the average response time for probe requests, the level of channel utilization, and the severity of congestion, to identify its capacity to process incoming requests and respond in a timely manner based on the network conditions.

In some embodiments, the network interface 220 of the access point 205 can transmit the probe response upon determining that the probe response can be scheduled within the scan dwell time. The probe response or a beacon frame can include a field that identifies a metric, such as an average response time for the probe requests. In some embodiments, the metric can be included in a probe response or a beacon frame. A field can refer to a specific data element within a communication frame used to convey information or metrics between devices. This field can be a standard-defined field or a customized field. A standard-defined field can be a data element that follows a predetermined format or structure according to an industry standard or protocol. For example, the standard-defined field can be conveyed using an existing beacon, reduced neighbor report (RnR), or probe response. A customized field can be a data element within a communication frame configured for a specific application or use case and is not defined by any industry standard. The customized field can be a proprietary element. In some embodiments, the field can be a custom specification defined within the UHR (ultra-high rate) standard or a similar protocol. The metric can provide data regarding the response efficiency of the access point, causing the station to evaluate network conditions more accurately. The proprietary element can include additional performance metrics, such as channel congestion or utilization, to provide a detailed view of the network environment. The proprietary element can include a data field that is not part of the standard protocol. The proprietary element can be defined according to the proprietary protocol used by the station 215 and access points 205. Unlike standard protocols (e.g., IEEE 802.11 for Wi-Fi), the proprietary protocol can include custom features that are not available in the standard protocol. The proprietary element can include a unique identifier (OUI), which is a 24-bit number assigned by the Institute of Electrical and Electronics Engineers (IEEE) Registration Authority. The OUI can be used in various contexts, such as in the first 24 bits of a MAC address to identify the manufacturer of the network device, in protocol identifiers to determine the source or destination organization, and in vendor-specific information to globally distinguish devices.

In some embodiments, the metrics can refer to measurable data points or indicators used to evaluate the performance of the access point 205. The metrics of time can specify the average time it takes for the access point 205 to receive or respond to probe requests. In this regard, the average time can refer to the duration between when a station 215 transmits a probe request and when the access point 205 receives and responds to the probe request. In some embodiments, the terms "metrics" or "metric of time" can be used interchangeably. In some embodiments, the metrics can include an average response time for an authentication request (e.g., ART-AuthReq), an association request (ART-AssocReq), or a reassociation request (ART-ReassocReq) from the station 215. For example, the response time for an authentication request can measure how quickly the access point 205 can verify the identity of the station 215, and the response time for an association request can measure how fast the access point 205 can establish a connection with the station 215. The response time for a reassociation request can measure how quickly the access point 205 can re-establish a connection with the station 215. In some embodiments, these metrics can be extended to action frames such as add block acknowledgment (ADDBA)-Request/Response and ART-ActionReq. In some embodiments, the access point can transmit a reduced neighbor report (RnR) to collocated access points, including a channel congestion or channel utilization. These metrics can be used to provide information about the network conditions to stations 215 and other devices.

In some implementations, the network interface 220 of the access point 205 can ignore duplicate probe requests upon determining that the response cannot be scheduled within the scan dwell time. In some embodiments, the network interface 220 can skip transmitting the probe response. In some embodiments, the network interface 220 can detect and ignore duplicate probe requests from the same station. For example, the network interface 220 can compare timestamps, match MAC addresses, or process the content of incoming requests to identify duplicates. In some embodiments, the access point 205 can transmit the probe response to the station 215 via a secondary (or a second) access point 205 associated with the station 215. The second access point 205 can be identified based on the basic service set identifier (BSSID) included in the probe request. In some embodiments, the second access point 205 and the station 215 can be within communication range of each other, such that the signal strength between them can be sufficient for reliable data transmission. For example, when the station 215 and the second access point 205 are said to be within communication range, the configuration indicates that the communication link can support effective data transfer.

In some embodiments, the access point 205 can include a scan dwell time monitor 225. The scan dwell time monitor 225 can be or include any script, file, program, application, set of instructions, or computer-executable code that is configured to measure the time spent by the access point 205 on each channel during scanning. The scan dwell time monitor 225 can monitor channel scanning, which can include periodically scanning different channels to detect probe requests, interference, and unauthorized devices. The dwell time monitored by the scan dwell time monitor 225 can vary depending on the mode of operation, including modes such as access point mode (short dwell times), air monitor mode (longer dwell times for security tasks), and spectrum monitor mode (adaptive dwell times to analyze the radio-frequency environment), among others.

In some embodiments, the scan dwell time monitor 225 of the access point 205 can determine whether it is possible to schedule the probe response within the scan dwell time. The scan dwell time monitor 225 can evaluate the availability of resources, such as processing power and channel bandwidth, to determine if the access point 205 can manage the probe response. In some embodiments, the scan dwell time monitor 225 can evaluate current network conditions, such as channel congestion and network load, to determine whether the network can process the response. In some embodiments, the scan dwell time monitor 225 can determine the time desired to process and transmit the probe response by comparing the estimated response time with the remaining time in the scan dwell period.

In some embodiments, the access point 205 can include a scan dwell time adjuster 230. The scan dwell time adjuster 230 can be or include any script, file, program, application, set of instructions, or computer-executable code that is configured to dynamically adjust the amount of time the access point 205 spends scanning each channel. The scan dwell time adjuster 230 can modify the scan dwell time based on network conditions and specific requirements. For example, in environments with high interference or many rogue devices, the access point 205 can increase the dwell time on certain channels to collect detailed information. In some embodiments, the scan dwell time adjuster 230 can minimize the dwell time to reduce disruption to client connectivity. In some embodiments, the scan dwell time adjuster 230 can increase the dwell time to facilitate comprehensive monitoring. In some embodiments, the scan dwell time adjuster 230 can dynamically adjust the scan dwell time based on the specific scanning needs of the environment. The scan dwell time adjuster 230 can implement adaptive scanning to prioritize channels with higher activity, such that the access point 205 spends more time on channels where issues are more likely to occur.

In some embodiments, the scan dwell time adjuster 230 of the access point 205 can dynamically adjust the scan dwell time for probe requests. The scan dwell time adjuster 230 can continuously monitor the network conditions, such as channel congestion, channel utilization, and interference levels, to determine whether adjustments are desired. For example, the scan dwell time adjuster 230 can reduce the scan dwell time in high-traffic environments to minimize disruptions or increase it in low-traffic situations for more thorough scans. In some embodiments, the access point 205 can evaluate its performance, including the average response time for probe requests, to determine, via the scan dwell time adjuster 230, if adjustments are desired. Based on the collected data, the scan dwell time adjuster 230 can determine the adjustment to the scan dwell time. The access point 205 can update its internal parameters to apply the adjusted scan dwell time.

In some embodiments, the access point 205 can include a queue manager 235. The queue manager 235 can be or include any script, file, program, application, set of instructions, or computer-executable code that is configured to manage the follow of the data packets via queues for transmission or reception. The queues can refer to buffers used to manage data packets as they travel through a network. The queue manager 235 can include input queues, which can temporarily store incoming data packets before processing, and output queues, which can hold data packets ready for transmission. The queue manager 235 can determine the order of packet processing and transmission. The queue manager 235 can prioritize the packet processing and transmission based on QoS requirements and network conditions. In some embodiments, the queue manager 235 can regulate the flow of data, delaying or dropping packets to avoid network congestion. In some embodiments, the queue manager 235 can inspect and assign incoming packets to one or more queues based on packet type, source, destination, or QoS requirements. In some embodiments, the queue manager 235 can manage buffering and dynamically allocate buffer space to prevent overflow. The queue manager 235 can adjust transmission rates and buffer sizes based on network conditions. In some embodiments, the queue manager 235 can implement policies to maintain consistent data flow.

In some embodiments, the queue manager 235 of the access point 205 can queue the probe request or ignore duplicate probe requests. The access point 205 can detect and ignore duplicate probe requests from the same station 215. For example, the access point 205 can compare timestamps, match MAC addresses, or process the content of incoming requests to identify duplicates. In some embodiments, where the queue manager 235 has already queued a response to a previous request, the access point 205 can avoid responding to new probe requests until the previously generated response has been processed.

The station 215 can include a network interface 220, a scan dwell time monitor 225, and a scan dwell time adjuster 230. The network interface 220, scan dwell time monitor 225, and scan dwell time adjuster 230 of the station 215 can be similar to, and include any of the structure and functionality of, their respective counterparts, such as the interface 220, scan dwell time monitor 225, and scan dwell time adjuster 230 of the access point 205.

The network interface 220 of the station 215 can manage the transmission and reception of probe requests and responses. The network interface 220 can include a wireless network adapter, which can allow the station 215 to connect to wireless networks by incorporating the physical layer (PHY) and the media access control (MAC) layer. The network interface 220 can include antenna(s) to transmit and receive wireless signals. The network interface 220 can include driver software that interfaces with the operating system and the wireless network adapter. The driver software can be used to scan the available networks, connect to an access point, and manage data transmission. The network interface 220 can support various network protocols, such as IEEE 802.11. The network interface 220 can provide security features, including support for encryption protocols, such as WPA2 or WPA3. The network interface 220 can include a graphical user interface (GUI) or command-line interface (CLI) that allows users to configure network settings, select networks, enter security keys, and manage network profiles.

In some embodiments, the network interface 220 of the station 215 can generate the probe request. The network interface 220 can generate the probe request for access point discovery. The probe request can include information, such as the station's scan dwell time or a corresponding priority level. The priority can indicate the urgency of the request, allowing the access point 205 to prioritize its response. For example, based on the SDT or priority, the access point 205 can determine whether it can respond within the allocated time or prioritize the response accordingly. In some embodiments, the priority can be classified into different values, for example, low priority for initial unassociated scans or discovery, normal priority for regular roam scans or background-associated scans, and high priority for final roaming scan cases, among others. The network interface 220 can determine that a scan for available access points is desired, which can be triggered by user action, such as connecting to a Wi-Fi network, or automatically based on predefined intervals or network conditions. The probe request can include the MAC address, a random identifier (timestamp), the service set identifier (SSID) (e.g., specific or a wildcard), and capabilities information (such as supported data rates and security protocols), among others. In some embodiments, the network interface 220 can include the scan dwell time (e.g., the amount of time the station waits for a response) as a customized field or a standard-defined field within the probe request.

In some embodiments, the network interface 220 of the station 215 can transmit the probe request to be received by an access point 205. The network interface 220 can broadcast the probe request, including the customized field or the standard-defined field, to all access points 205 within a range. The network interface 220 can modulate the probe request data onto a carrier wave and transmit the modulated signal. The network interface 220 can select a specific channel, such as 2.4 GHz or 5 GHz, based on the configurations or the available channels in the area.

In some embodiments, the network interface 220 of the station 215 can listen for the probe response. The network interface 220 can activate a receiver to listen for incoming probe responses. The receiver can be tuned to the same channel used for transmitting the probe request. The network interface 220 can continuously monitor the incoming radio frequency (RF) spectrum for signals that match the expected characteristics of a probe response, and if a signal is detected, the network interface 220 can demodulate the signal. The network interface 220 can parse the received data to determine if it is a valid probe response frame, for example, checking for specific fields and values. The network interface 220 can compare the received probe response with the previously sent probe request to verify that it is a response to the station's own query.

In some embodiments, the network interface 220 of the station 215 can receive the probe response if no response timeout occurs. If the probe response is received before the timer expires, the network interface 220 can extract relevant metrics from the probe response. In some embodiments, the network interface 220 can receive the probe response, including a customized field or a standard-defined field. The customized field, such as the proprietary element, or the standard-defined field can identify the metrics associated with the probe response.

In some embodiments, where the access point 205 is a collocated access point, the network interface 220 of the station 215 can receive the metric via a reduced neighbor report (RnR) from the collocated access point. For example, the network interface 220 can extract metrics, such as the average response time for probe requests (ART-PReq), channel congestion, or channel utilization, from the RnR. Based on the reported metrics, such as if the collocated access point's ART-PReq, channel congestion, or channel utilization is unfavorable, the network interface 220 can initiate multi-link (ML) probing. For instance, the network interface 220 can transmit probe request frames across multiple channels (e.g., 2.4 GHz, 5 GHz, 6 GHz) to discover available access points 205. The collocated access points can respond with probe response frames including information about their capabilities, such as supported channels, SSID, and security parameters. The network interface 220 can evaluate the signal strength, signal-to-noise ratio (SNR), and other metrics from the received responses to determine the best connection quality.

The scan dwell time monitor 225 of the station 215 can actively monitor the station's behavior as the station 215 switches between different channels. The scan dwell time monitor 225 can monitor the timing of probe requests. The scan dwell time monitor 225 can be used to log the elapsed time spent on each channel. The scan dwell time monitor 225 can monitor incoming responses from access points 205. The scan dwell time monitor 225 can collect data regarding the timing and frequency of responses received during the scan dwell period.

In some embodiments, the scan dwell time monitor 225 of the station 215 can be initialized to track the elapsed time after the probe request is transmitted. In some embodiments, the scan dwell time monitor 225 can be set to count up from zero, with the maximum value corresponding to the specified scan dwell time. The scan dwell time monitor 225 can measure the amount of time that has elapsed since the station 215 transmitted the probe request. The scan dwell time monitor 225 can be used to determine if a response from an access point 205 has been received within the specified time limit. In some embodiments, the scan dwell time monitor 225 of the station 215 can determine whether the response timeout has been reached. In some embodiments, the scan dwell time monitor 225 can start a timer when the station 215 transmits a probe request. If the timer reaches a specified time limit before any probe responses are received, the scan dwell time monitor 225 can determine that the response timeout has been reached. In some embodiments, the scan dwell time monitor 225 can implement an event listener for probe responses and can configure a timeout event that triggers after a predefined time period. If a probe response is received before the timeout event triggers, the scan dwell time monitor 225 can process the response and cancel the timeout event. If the timeout event triggers first, the scan dwell time monitor 225 can determine that the response timeout has been reached. In some implementations, the scan dwell time monitor 225 can implement a hybrid approach where a timer is set along with interrupts for incoming probe responses. If a probe response is received, an interrupt can be triggered, and the station 215 can process the response while resetting the timer. If the timer reaches the specified time limit without any interrupts, the scan dwell time monitor 225 can determine that the response timeout has been reached.

The scan dwell time adjuster 230 of the station 215 can dynamically modify the dwell time based on network conditions. The scan dwell time adjuster 230 can adjust the time spent on each channel based on the scanning results and network feedback. The scan dwell time adjuster 230 can evaluate the signal strength and the quality of responses from access points 205 to determine whether the scan dwell time should be extended or reduced. In some embodiments, the scan dwell time adjuster 230 can store information regarding detected access points 205 and the corresponding signal strengths.

In some embodiments, the scan dwell time adjuster 230 of the station 215 can dynamically increase the scan dwell time if a response timeout occurs. The scan dwell time adjuster 230 can adjust the scan dwell time based on localized interference. For example, if the station 215 does not receive a response from the access point 205 after a portion (e.g., half) of the scan dwell time has elapsed, or if the station 215 determines that the surrounding channel conditions indicate high congestion (e.g., due to energy detection (ED) or overlapping basic service set (OBSS) frames), the scan dwell time adjuster 230 can dynamically increase the scan dwell time to account for any delays in probe response delivery caused by the congestion. The ED frame can be used to determine whether a particular frequency band is occupied by a signal or is free (i.e., only contains noise). The OBSS frames can refer to the data frames transmitted by access points 205 and stations 215 within overlapping coverage areas of different basic service sets (BSSs). In a wireless network, a BSS can be a group of devices that communicate with each other through a common access point 205.

In some embodiments, the scan dwell time adjuster 230 of the station 215 can dynamically adjust the scan dwell time for subsequent probe requests. For example, the scan dwell time adjuster 230 can adjust the scan dwell time based on metrics such as channel congestion, channel utilization, or the average response time for probe requests. The station 215 can continuously monitor network conditions and collect data on various factors. Based on the collected data, the station 215 can evaluate the desire to adjust the scan dwell time. If an adjustment is desired, the scan dwell time adjuster 230 can determine the appropriate change, for example, based on the severity of congestion, the average response time, and the desired level of responsiveness. In some embodiments, the station 215 can update its internal parameters to implement the updated scan dwell time. For example, if the station 215 detects high channel congestion or utilization, the station 215, via the scan dwell time adjuster 230, can increase the scan dwell time to allow more time for responses from the access point 205. In some embodiments, if the station 215 detects slow response times, the scan dwell time adjuster 230 can extend the dwell time to give the access point 205 more time to respond. In some embodiments, if the network operates efficiently with low congestion and fast response times, the scan dwell time adjuster 230 can decrease the scan dwell time to minimize overhead.

In some embodiments, where the access point 205 is a collocated access point, the station 215 can use the average response time for probe requests (ART-PReq), channel congestion, or channel utilization provided in the RnR or beacon to adjust, via the scan dwell time adjuster 230, the scanning behavior. The scan dwell time adjuster 230 can dynamically adjust the scan dwell time when scanning for the collocated access point on its channel based on the reported metrics. For example, if the collocated access point's ART-PReq, channel congestion, or channel utilization is unfavorable, the scan dwell time adjuster 230 can dynamically adjust the scan dwell time.

In some embodiments, where the station 215 is awaiting a response to an authentication request, an association request, a reassociation request, or an add block acknowledgement (ADDBA) request, the scan dwell time adjuster 230 of the station 215 can dynamically adjust the dwell time. For example, the scan dwell time adjuster 230 can adjust the dwell time based on the average response time for the corresponding request provided by the access point 205. In some embodiments, the station 215 can update its internal parameters to implement the updated dwell time. For example, if the station 215 detects slow response times for authentication, association, reassociation, or ADDBA requests, the scan dwell time adjuster 230 can extend or adjust the dwell time.

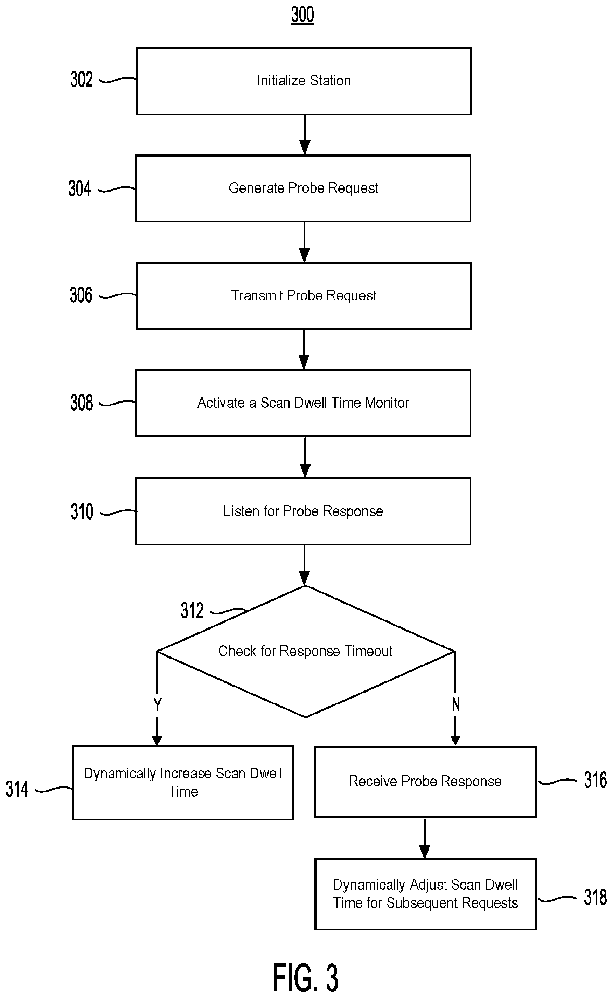

FIG. 3 illustrates an example method 300 of improving access point discovery with dynamic dwell time. The method 300 can be implemented using a system 100, 200, or any other features discussed in FIGS. 1-2. The method 300 can include acts 302-318. At 302, a station can be initialized. At 304, the station can generate a probe request. At 306, the station can transmit the probe request. At 308, the station can activate a scan dwell time monitor. At 310, the station can listen for a probe response. At 312, the station can check if the response timeout has been reached. At 314, the station can dynamically increase the scan dwell time if the response timeout occurs. At 316, the station can receive the probe response if no response timeout occurs. At 318, the station can dynamically adjust the scan dwell time for subsequent probe requests.

At 302, the station can be initialized by powering on and activating its wireless network interface. The station can scan for available networks by switching through channels and listening for beacon frames from access points. The station can select a network based on factors such as signal strength and security settings. After selecting a network, the station can initiate the authentication process and send an association request. Once authenticated and associated, the station can obtain an IP address and configure its network settings.

At 304, the station can generate the probe request. The station can generate the probe request for access point discovery. The probe request can include information, such as the station's scan dwell time or a corresponding priority level. The priority can indicate the urgency of the request, allowing the access point to prioritize its response. For example, based on the SDT or priority level, the access point can determine whether it can respond within the allocated time or prioritize the response accordingly. In some embodiments, the priority can be classified into different values, for example, low priority for initial unassociated scans or discovery, normal priority for regular roam scans or background-associated scans, and high priority for final roaming scan cases, among others.

The station can determine that a scan for available access points is desired, which can be triggered by user action, such as connecting to a Wi-Fi network, or automatically based on predefined intervals or network conditions. The probe request can include the MAC address, a random identifier (timestamp), the service set identifier (SSID) (e.g., specific or a wildcard), and capabilities information (such as supported data rates and security protocols), among others. In some embodiments, the station can include the scan dwell time (e.g., the amount of time the station waits for a response) as a customized field or a standard-defined field within the probe request. The customized field, such as the proprietary element, can include a data field that is not part of the standard protocol. For example, the proprietary element can be defined according to the proprietary protocol used by the station and access points. Unlike standard protocols (e.g., IEEE 802.11 for Wi-Fi), the proprietary protocol can include custom features that are not available in the standard protocol.

At 306, the station can transmit the probe request. The station can transmit the probe request to be received by an access point. The station can broadcast the probe request, including the customized field or the standard-defined field, to all access points within a range. The station can modulate the probe request data onto a carrier wave and transmit the modulated signal. The station can select a specific channel, such as 2.4 GHz or 5 GHz, based on the configurations or the available channels in the area.

At 308, the station can activate the scan dwell time monitor. The station, via the scan dwell time monitor, can track the elapsed time after the probe request is transmitted. In some embodiments, the scan dwell time monitor of the station can be set to count up from zero, with the maximum value corresponding to the specified scan dwell time. The scan dwell time monitor can measure the amount of time that has elapsed since the station transmitted the probe request. The scan dwell time monitor can be used to determine if a response from an access point has been received within the specified time limit.

At 310, the station can listen for the probe response. The station can activate its receiver to listen for incoming probe responses. The receiver can be tuned to the same channel used for transmitting the probe request. The station can continuously monitor the incoming radio frequency (RF) spectrum for signals that match the expected characteristics of a probe response, and if a signal is detected, the station can demodulate the signal. The station can parse the received data to determine if it is a valid probe response frame, for example, checking for specific fields and values. The station can compare the received probe response with the previously sent probe request to verify that it is a response to its own query.

At 312, the station can check if the response timeout has been reached. In some embodiments, the station can start a timer when it transmits a probe request. If the timer reaches a specified time limit before any probe responses are received, the station can determine that the response timeout has been reached. In some embodiments, the station can implement an event listener for probe responses and can configure a timeout event that triggers after a predefined time period. If a probe response is received before the timeout event triggers, the station can process the response and cancel the timeout event. If the timeout event triggers first, the station can determine that the response timeout has been reached. In some implementations, the station can implement a hybrid approach where a timer is set along with interrupts for incoming probe responses. If a probe response is received, an interrupt can be triggered, and the station can process the response while resetting the timer. If the timer reaches the specified time limit without any interrupts, the station can determine that the response timeout has been reached.

At 314, the station can dynamically increase the scan dwell time if the response timeout occurs. The station can adjust the scan dwell time based on localized interference. For example, if the station does not receive a response from the access point after a portion (e.g., half) of the scan dwell time has elapsed, or if the station determines that the surrounding channel conditions indicate high congestion (e.g., due to energy detection (ED) or overlapping basic service set (OBSS) frames), the station can dynamically increase the scan dwell time to account for any delays in probe response delivery caused by the congestion.

At 316, the station can receive the probe response if no response timeout occurs. If the probe response is received before the timer expires, the station can extract relevant metrics from the probe response. In some embodiments, the station can receive the probe response, including a customized field or a standard-defined field. The customized field, such as the proprietary element, or the standard-defined field can identify the metrics associated with the probe response. The metrics can specify the average time it takes for the access point to receive or respond to probe requests.

At 318, the station can dynamically adjust the scan dwell time for subsequent probe requests. For example, the station can adjust the scan dwell time based on metrics such as channel congestion, channel utilization, or the average response time for probe requests. The station can continuously monitor network conditions and collect data on various factors. Based on the collected data, the station can evaluate the desire to adjust the scan dwell time. If an adjustment is desired, the station can determine the appropriate change, for example, based on the severity of congestion, the average response time, and the desired level of responsiveness. The station can update its internal parameters to implement the updated scan dwell time. For example, if the station detects high channel congestion or utilization, the station can increase the scan dwell time to allow more time for responses from the access point. In some embodiments, if the station detects slow response times, the station can extend the dwell time to give the access point more time to respond. In some embodiments, if the network operates efficiently with low congestion and fast response times, the station can decrease the scan dwell time to minimize overhead.

In some embodiments, where the station is awaiting a response to an authentication request, an association request, a reassociation request, or an add block acknowledgement (ADDBA) request, the station can dynamically adjust the dwell time. For example, the station can adjust the dwell time based on the average response time for the corresponding request provided by the access point. In some embodiments, the station can update its internal parameters to implement the updated dwell time. For example, if the station detects slow response times for authentication, association, reassociation, or ADDBA requests, the station can extend or adjust the dwell time.

In some embodiments, where the access point is a collocated access point, the station can receive the metric via a reduced neighbor report (RnR) from the collocated access point. The station can use the average response time for probe requests (ART-PReq), channel congestion, or channel utilization provided in the RnR or beacon to adjust the scanning behavior. The station can dynamically adjust the dwell time when scanning for the collocated access point on its channel based on the reported metrics. For example, if the collocated access point's ART-PReq, channel congestion, or channel utilization is unfavorable, the station can initiate multi-link (ML) probing. For instance, during ML probing, the station can transmit probe request frames across multiple channels (e.g., 2.4 GHz, 5 GHz, 6 GHz) to discover available access points. The collocated access points can respond with probe response frames including information about their capabilities, such as supported channels, SSID, and security parameters. The station can evaluate the signal strength, signal-to-noise ratio (SNR), and other metrics from the received responses to determine the best connection quality. In some embodiments, the station can use the ART-PReq value reported by the collocated access point to fine-tune the scan dwell time during ML probing.

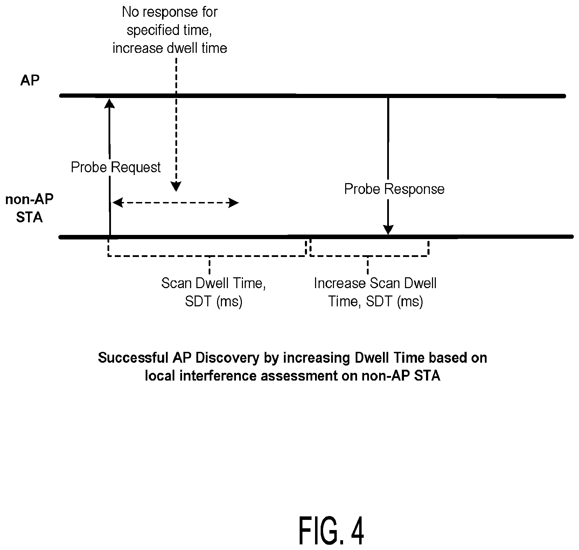

Referring now to FIG. 4, depicted is an example implementation of a successful access point discovery by increasing a scan dwell time based on local interference assessment of a station, as described in connection with FIG. 3. The station can transmit a probe request to the access point. The probe request can identify a scan dwell time of the station. The station can initiate the scan dwell time monitor. The scan dwell time monitor can monitor for a probe response within the specified dwell time. If no response is received within that time, for example, due to localized interference, the station can determine that a response timeout has occurred. In response, the station can dynamically increase the scan dwell time to allow additional time to receive a response. The station can continue to listen for a response within the newly extended scan dwell time.

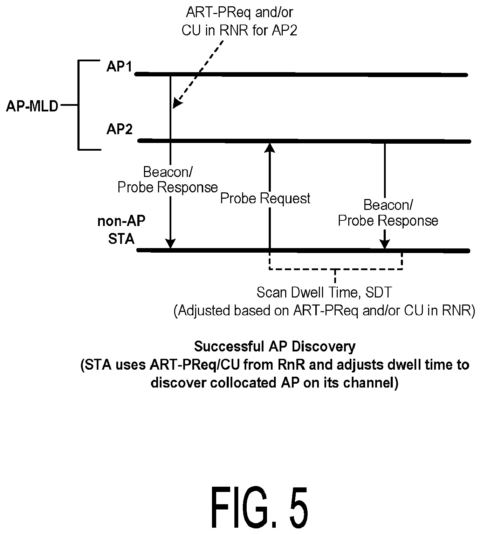

Referring now to FIG. 5, depicted is an example implementation of a station discovering a collocated access point on its channel using the average response time for probe requests (ART-PReq) or channel utilization (CU) from a reduced neighbor report (RnR), as described in connection with FIG. 3. The station can transmit a probe request on its channel, and multiple access points (e.g., AP1 and AP2) can respond with their probe responses. The station can receive the RnR from AP1 that includes information about AP2, such as the corresponding ART-PReq and CU. Based on the data in the RnR, the station can dynamically adjust its scan dwell time for scans on AP2's channel, for example, based on the ART-PReq and CU values reported by AP1. In this configuration, the station successfully discovers AP2 by adjusting the scan dwell time.

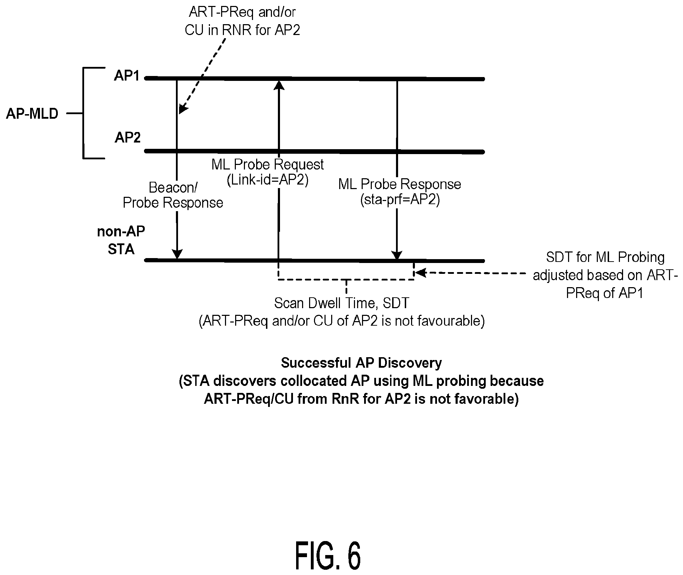

Referring now to FIG. 6, depicted is an example implementation of a station discovering a collocated access point using multi-link (ML) probing, as described in connection with FIG. 3. The station can transmit a probe request on its channel, and access points (e.g., AP1 and AP2) can respond with their respective beacon or probe responses. The station can receive the reduced neighbor report (RnR) from AP1, which includes information about AP2, such as the average response time for probe requests (ART-PReq) or channel utilization (CU). If the ART-PReq or CU for AP2 is unfavorable, the station can initiate ML probing by transmitting an ML probe request to AP1, with a specific link identifier (e.g., Link ID = AP2), indicating that the station is targeting AP2 for establishing a connection. AP1 can respond with an ML probe response, which includes additional information relevant to the ML probe request for AP2. The station can use the ART-PReq value from the RnR and the additional information from the ML probe response to dynamically adjust its scan dwell time for scans on AP2's channel to improve the discovery process.

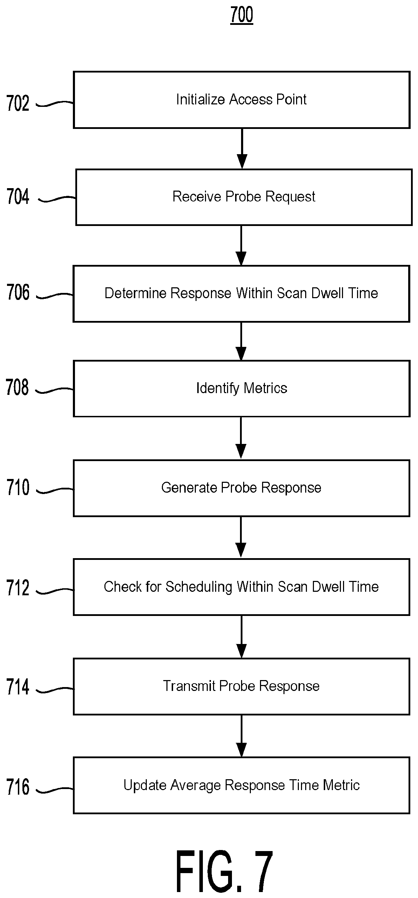

FIG. 7 illustrates another example method 700 of improving access point discovery with dynamic dwell time. The method 700 can be implemented using a system 100, 200, or any other features discussed in FIGS. 1-2. The method 700 can include acts 702-720. At 702, the access point can be initialized. At 704, the access point can receive a probe request. At 706, the access point can determine whether a probe response can be transmitted within a scan dwell time. At 708, the access point can identify metrics. At 710, the access point can generate a probe response. At 712, the access point can check whether it is possible to schedule the probe response within the scan dwell time. At 714, the access point can transmit the probe response upon determining that the response can be scheduled within the scan dwell time. At 716, the access point can update the average response time metric.

At 702, the access point can be initialized by powering on the access point, initiating its startup sequence. The access point's hardware components, such as the processor, memory, network interfaces, and radio modules, can be initialized and configured. The access point can load its operating system and software components into memory. The access point can load its configuration settings, such as network parameters, security settings, and operational modes. The access point can perform self-tests to verify the functionality of its hardware and software. The access point can initiate a network discovery process to identify other devices on the network. The wireless radios can be configured by selecting channels and setting transmission power. The access point can start broadcasting beacon frames to signal its presence and provide network information, including SSID, channel, and security. Once the initialization process is complete, the access point is ready to receive and process connections.

At 704, the access point can receive a probe request. The access point can receive the probe request from a station. The probe request can identify a scan dwell time of the station and the associated priority. The priority can refer to the relative importance or urgency assigned to a probe request by the station. The access point can, via the network interface, listen for incoming signals. The access point can continuously monitor the radio frequency (RF) spectrum for signals matching the characteristics of a probe request. Upon detecting a signal, the access point can demodulate the signal to extract the data. The received data can be parsed to verify if it is a valid probe request by checking specific fields and values. If the probe request is valid, the access point can extract information, such as the MAC address, the desired SSID, the scan dwell time, and other relevant parameters.

At 706, the access point can determine whether a probe response can be transmitted within the scan dwell time by evaluating various factors. For example, the access point can determine the priority of the probe request based on the supported data rates, giving higher priority to stations with data rates compatible with the access point's capabilities. The access point can evaluate signal strength using the received signal strength indicator (RSSI), prioritizing requests with stronger signals that typically indicate closer proximity. If the probe request includes a specific SSID that matches the access point's network, the access point can prioritize that request over generic or wildcard ones. In some embodiments, the access point can determine the priority based on the station's capabilities, such as support for specific Wi-Fi standards or security protocols (e.g., WPA3). In some embodiments, the access point can evaluate the current network load, prioritizing requests from stations that are more likely to maintain a stable and efficient connection during periods of heavy load. In some embodiments, the access point can consider any quality of service (QoS) requirements indicated in the probe request, prioritizing requests that desire low latency or real-time performance. In some embodiments, the access point can use the access category for voice (AC-VO) to prioritize the probe response, beacon frame, or other high-priority traffic such as voice or video communication.

At 708, the access point can identify metrics. The access point can identify metrics to evaluate the current network conditions and determine whether the access point can respond to a probe request within the specified timeframe. The metrics can include several factors, such as channel congestion, interference, and overall network load, which can be used to evaluate the network's performance and availability. In some embodiments, the access point can evaluate specific metrics, such as the average response time for probe requests, the level of channel utilization, and the severity of congestion, to identify its capacity to process incoming requests and respond in a timely manner based on the network conditions.

At 710, the access point can generate the probe response. The probe response can include information such as the access point's BSSID, SSID, channel number, supported data rates, security details, and other relevant network parameters. The access point can incorporate one or more metrics, such as the average response time for probe requests, channel congestion levels, and channel utilization data. After collecting and organizing the data, the access point can generate the probe response, including any customized fields or standard-defined fields, as desired. The access point can modulate the probe response data onto a carrier wave for transmission to the station.

In some embodiments, the access point can queue the probe request, which can refer to temporarily holding probe requests for later processing, and ignore duplicate probe requests. The access point can detect and ignore duplicate probe requests from the same station. For example, the access point can compare timestamps, match MAC addresses, or process the content of incoming requests to identify duplicates. In some embodiments, where the access point has already queued a response to a previous or an earlier request, the access point can avoid responding to new probe requests until the previously generated response has been processed or transmitted.

At 712, the access point can check whether it is possible to schedule the probe response within the scan dwell time. The access point can evaluate the availability of resources, such as processing power and channel bandwidth, to determine if the access point can manage the probe response. In some embodiments, the access point can evaluate current network conditions, such as channel congestion and network load, to determine whether the network can process the response. In some embodiments, the access point can determine the time desired to process and transmit the probe response by comparing the estimated response time with the remaining time in the scan dwell period.

At 714, the access point can transmit the probe response upon determining that the probe response can be scheduled within the scan dwell time. The probe response can include a customized field or a standard-defined field identifying a metric, such as the average response time for the probe requests from the station. The metric can provide data regarding the response efficiency of the access point, causing the station to evaluate network conditions more accurately. The customized field, such as the proprietary element, or the standard-defined field can include additional performance metrics, such as channel congestion or utilization, to provide a detailed view of the network environment. In some embodiments, the access point can provide an average response time metric for additional frames, such as authentication (ART-AuthReq) and (re)association (ART-AssocReq) frames.

At 716, the access point can update the average response time (ART-PReq) metric. After the access point has transmitted the probe response to the station, the access point can update the ART-PReq, which can specify the average time taken to respond to probe requests. In some embodiments, the access point can average the response times of all requests over a specific period to update the ART-PReq metric. The ART-PReq can be updated in real-time or at regular intervals (e.g., every minute, hour, or day). The updated ART-PReq metric can be included in beacon frames, probe responses, or reduced neighbor reports (RNRs).

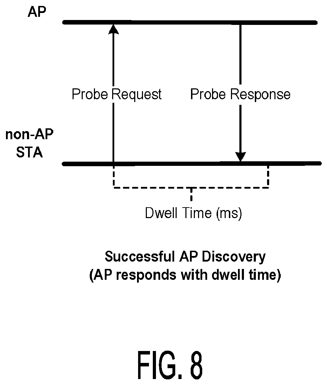

Referring now to FIG. 8, depicted is an example implementation of a successful access point discovery, where an access point responds within a scan dwell time, as described in connection with FIGS. 3 and 7. The station can transmit a probe request, specifying the scan dwell time. The access point can receive the probe request and process the request by determining whether the access point can respond within the specified scan dwell time. The access point can generate and transmit a probe response to the station within the allotted time. In this configuration, the station receives the probe response before the scan dwell time expires.

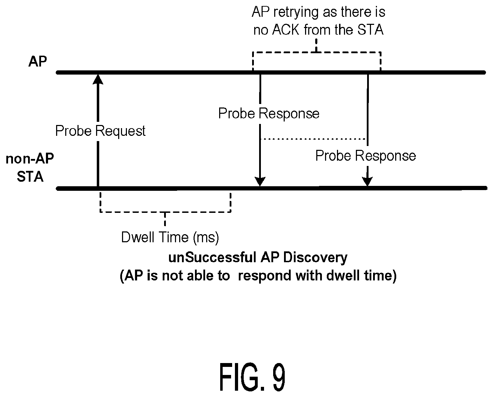

Referring now to FIG. 9, depicted is an example implementation of an unsuccessful access point discovery, where an access point is not able to respond within a scan dwell time, as described in connection with FIGS. 3 and 7. The station can transmit a probe request, specifying the scan dwell time. The access point can receive and process the request. After generating the probe response, the access point can transmit the response to the station. In some embodiments, if the station fails to send an acknowledgment (ACK) within a reasonable timeframe, the access point can attempt to retransmit the probe response. If the station still does not respond or if the access point is unable to transmit the response within the scan dwell time, the discovery process can be considered unsuccessful.

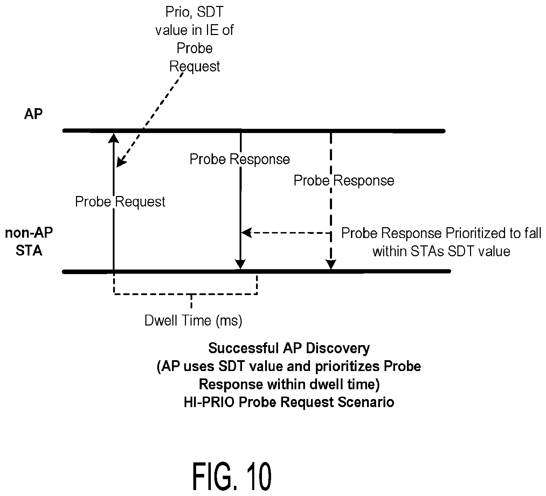

Referring now to FIG. 10, depicted is an example implementation of a successful access point discovery of a high priority probe request by utilizing a scan dwell time value and prioritizing the probe response within the specified time, as described in connection with FIGS. 3 and 7. The station can transmit a probe request, specifying the scan dwell time value and priority level (e.g., high priority) as part of the proprietary element or the standard-defined field within the probe request. The access point can receive the probe request, including the scan dwell time value, and process the request based on the priority level. The access point can prioritize the probe response and transmit the probe response within the station's specified scan dwell time. For example, in this configuration, the station receives the probe response before the scan dwell time expires.

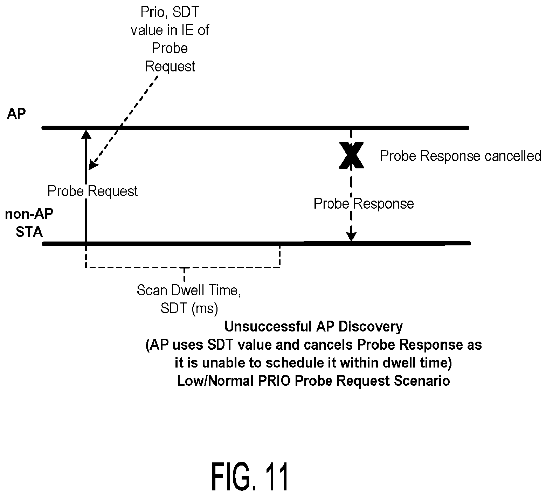

Referring now to FIG. 11, depicted is an example implementation of an unsuccessful access point discovery of a low or normal priority probe request, as described in connection with FIGS. 3 and 7. The station can transmit a probe request, including the scan dwell time value and priority level (e.g., low, normal, or high priority) as part of the proprietary element within the probe request. The access point can receive and process the request. The access point can evaluate whether it can schedule a response within the specified scan dwell time based on the priority level. If the access point determines that it cannot schedule the response within the scan dwell time, the access point can cancel the transmission. The station can continue to wait for a response until the scan dwell time expires. In this configuration, since no response is received within the scan dwell time, the discovery process is considered unsuccessful.

It should be noted that certain passages of this disclosure may reference terms such as "first" and "second" in connection with devices, modes of operation, transmit chains, roles, etc., for purposes of identifying or differentiating one from another or from others. These terms are not intended to merely relate entities (e.g., a first device and a second device) temporally or according to a sequence, although in some cases, these entities may include such a relationship. Nor do these terms limit the number of possible entities (e.g., devices) that may operate within a system or environment. The terms coupled or connected (which may refer to electronic or communicative coupling or connection, such as for the purposes of data transmission) include indirect and direct couplings and connections.

While the disclosure has been described with respect to specific embodiments, one skilled in the art will recognize that numerous modifications are possible. For instance, although specific examples of rules (including triggering conditions and/or resulting actions) and processes for generating suggested rules are described, other rules and processes can be implemented. Embodiments of the disclosure can be realized using a variety of computer systems and communication technologies including but not limited to specific examples described herein.

Embodiments of the present disclosure can be realized using any combination of components and/or programmable processors and/or other programmable devices. The various processes described herein can be implemented on the same processor or different processors in any combination. Where components are described as being configured to perform certain operations, such configuration can be accomplished, e.g., by designing electronic circuits to perform the operation, by programming programmable electronic circuits (such as microprocessors) to perform the operation, or any combination thereof. Further, while the embodiments described above may make reference to specific hardware and software components, those skilled in the art will appreciate that different combinations of hardware and/or software components may also be used and that particular operations described as being implemented in hardware might also be implemented in software or vice versa.

Computer programs incorporating various features of the present disclosure may be encoded and stored on various computer readable storage media; suitable media include magnetic disk or tape, optical storage media such as compact disk (CD) or DVD (digital versatile disk), flash memory, and other non-transitory media. Computer readable media encoded with the program code may be packaged with a compatible electronic device, or the program code may be provided separately from electronic devices (e.g., via Internet download or as a separately packaged computer-readable storage medium).

Thus, although the disclosure has been described with respect to specific embodiments, it will be appreciated that the disclosure is intended to cover all modifications and equivalents within the scope of the following claims.

It should be understood that the disclosed embodiments are not representative of all claimed innovations. As such, certain aspects of the disclosure have not been discussed herein. Alternate embodiments that may not have been presented for a specific portion of the innovations or that further undescribed alternate embodiments may be available for a portion is not to be considered a disclaimer of those alternate embodiments. Thus, it is to be understood that other embodiments can be utilized and functional, logical, operational, organizational, structural and/or topological modifications may be made without departing from the scope of the disclosure. As such, all examples and/or embodiments are deemed to be non-limiting throughout this disclosure.

Some embodiments described herein relate to methods. It should be understood that such methods can be computer implemented methods (e.g., instructions stored in memory and executed on processors). Where methods described above indicate certain events occurring in a certain order, the ordering of certain events can be modified. Additionally, certain of the events can be performed repeatedly, concurrently in a parallel process when possible, as well as performed sequentially as described above. Furthermore, certain embodiments can omit one or more described events.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for a specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

Some embodiments and/or methods described herein can be performed by software (executed on hardware), hardware, or a combination thereof. Hardware modules may include, for example, a general-purpose processor, a field-programmable gate array (FPGA), and/or an application-specific integrated circuit (ASIC). Software modules (executed on hardware) can be expressed in a variety of software languages (e.g., computer code), including C, C++, Java^{™}, Ruby, Visual Basic^{™}, and/or other object-oriented, procedural, or other programming language and development tools. Examples of computer code include, but are not limited to, micro-code or micro-instructions, machine instructions, such as those produced by a compiler, code used to produce a web service, and files containing higher-level instructions that are executed by a computer using an interpreter. For example, embodiments can be implemented using Python, Java, JavaScript, C++, and/or other programming languages and software development tools. For example, embodiments may be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

The drawings primarily are for illustrative purposes and are not intended to limit the scope of the subject matter described herein. The drawings are not necessarily to scale; in some instances, various aspects of the subject matter disclosed herein can be shown exaggerated or enlarged in the drawings to facilitate an understanding of different features. In the drawings, like reference characters generally refer to like features (e.g., functionally similar and/or structurally similar elements).

The acts performed as part of a disclosed method(s) can be ordered in any suitable way. Accordingly, embodiments can be constructed in which processes or steps are executed in an order different than illustrated, which can include performing some steps or processes simultaneously, even though shown as sequential acts in illustrative embodiments. Put differently, it is to be understood that such features may not necessarily be limited to a particular order of execution, but rather, any number of threads, processes, services, servers, and/or the like that may execute serially, asynchronously, concurrently, in parallel, simultaneously, synchronously, and/or the like in a manner consistent with the disclosure. As such, some of these features may be mutually contradictory, in that they cannot be simultaneously present in a single embodiment. Similarly, some features are applicable to one aspect of the innovations, and inapplicable to others.

Where a range of values is provided, it is understood that each intervening value, to the tenth of the unit of the lower limit unless the context clearly dictates otherwise, between the upper and lower limit of that range and any other stated or intervening value in that stated range is encompassed within the disclosure. That the upper and lower limits of these smaller ranges can independently be included in the smaller ranges is also encompassed within the disclosure, subject to any specifically excluded limit in the stated range. Where the stated range includes one or both of the limits, ranges excluding either or both of those included limits are also included in the disclosure.

The phrase "and/or," as used herein in the specification and in the embodiments, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements can optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the embodiments, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of" or "exactly one of," or, when used in the embodiments, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of." "Consisting essentially of," when used in the embodiments, shall have its ordinary meaning as used in the field of patent law.

As used herein in the specification and in the embodiments, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements can optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the embodiments, as well as in the specification above, all transitional phrases such as "comprising," "including," "carrying," "having," "containing," "involving," "holding," "composed of," and the like are to be understood as open-ended, i.e., to mean including but not limited to. Only the transitional phrases "consisting of" and "consisting essentially of" shall be closed or semi-closed transitional phrases, respectively, as set forth in the United States

Patent Office Manual of Patent Examining Procedures, Section 2111.03.

## Claims

1. A station (215) comprising:
one or more processors (121), coupled to memory (122), configured to:
generate a probe request for access point discovery, the probe request identifying a scan dwell time of the station (215) and a priority;
transmit the probe request to be received by an access point (205);
receive from the access point (205) a probe response, the probe response identifying a metric comprising a time that the access point (205) responds to probe requests; and
responsive to the probe response, adjust the scan dwell time of the station (215) for subsequent probe requests.

2. The station (215) of claim 1, wherein the access point (205) is further configured to respond to the probe request within the identified scan dwell time based at least on the priority of the probe request.

3. The station (215) of claim 1 or 2, wherein the metric comprises an average response time for the access point (205) to respond to the probe requests.

4. The station (215) of any of claims 1 to 3, wherein the probe request comprises a field identifying the metric, the field comprising a customized field or a standard-defined field, wherein the metric comprises at least the scan dwell time or a priority value, the priority value including at least one of a low priority value, a normal priority value, or a high priority value.

5. The station (215) of any of claims 1 to 4, wherein the one or more processors (121) are further configured to adjust the scan dwell time based at least on the metric, the metric comprising at least one of channel congestion, channel utilization, or an average response time for the probe requests.

6. The station (215) of claim 5, wherein the access point (205) is a collocated access point (205).

7. The station (215) of claim 6, wherein the one or more processors (121) are further configured to receive the metric via a reduced neighbor report of the collocated access point (205).

8. The station (215) of claim 7, wherein the one or more processors (121) are further configured to:
scan the collocated access point (205) based at least on the average response time for probe requests of the collocated access point (205) or the congestion metric obtained from the reduced neighbor report, or
scan the collocated access point (205) using multi-link probing.

9. The station (215) of any of claims 1 to 8, wherein the one or more processors (121) are further configured to adjust the dwell time for at least one of an authentication request, an association request, a reassociation request, or an add block acknowledgement, ADDBA, request based on an average response time for a corresponding request provided by the access point (205).

10. A station (215) comprising:
one or more processors (121), coupled to memory (122), configured to:
transmit a probe request to be received by an access point (205), the station having a scan dwell time to wait for a probe response;
while waiting for the probe response during the scan dwell time, determine that the probe response from the access point (205) has yet to be received at a point during the scan dwell time; and
dynamically increase, responsive to the determination, the scan dwell time while waiting for the probe response from the access point (205).

11. The station (215) of claim 10, comprising at least one of the following features:
(i) wherein the one or more processors (121) are further configured to dynamically increase the scan dwell time based at least on a metric received from the access point (205), the metric comprising at least one of channel congestion, channel utilization, or an average response time for probe requests;
(ii) wherein the one or more processors (121) are further configured to dynamically increase the scan dwell time based at least on localized interference, the localized interference comprising at least one of an energy detection frame or an overlapping basic service set frame.

12. An access point (205) comprising:
one or more processors (121), coupled to memory (122), configured to:
receive a probe request from a station (215), the probe request identifying a scan dwell time of the station (215) and a priority;
determine to respond to the probe request within the scan dwell time based at least on the priority;
identify one or more of a metric of time for the access point (205) to respond to probe requests, wherein the metric of time is determined based at least on channel congestion or channel utilization;
generate a probe response comprising one or more of the metric of time for the access point (205) to respond to the probe requests; and
transmit the probe response within the scan dwell time.

13. The access point (205) of claim 12, comprising at least one of the following features:
(i) wherein the one or more processors (121) are further configured to suspend transmission of the probe response upon determining that the probe response cannot be scheduled within the scan dwell time;
(ii) wherein the one or more processors (121) are further configured to transmit the probe response to the station (215) via a second access point (205) associated with the station (215), wherein the second access point (205) is identified based on a basic service set identifier included in the probe request;
(iii) wherein the metric of time further comprises an average response time for at least one of an authentication request, an association request, a reassociation request, or an add block acknowledgement, ADDBA, request from the station (215);
(iv) wherein the one or more processors (121) are further configured to transmit a reduced neighbor report to collocated access points (205), the reduced neighbor report including at least one of channel congestion or channel utilization.

14. An access point (205) comprising:
one or more processors (121), coupled to memory (122), configured to:
receive a probe request from a station (215), the probe request identifying a scan dwell time of the station (215);
determine that the access point (205) is unable to transmit a probe response within the scan dwell time of the station (215);
skip transmitting the probe response;
queue the probe request until the probe response until resolution of the probe request occurs; and
while the probe request is queued, ignore duplicate probe requests from the station (215).

15. The access point (205) of claim 14, comprising at least one of the following features:
(i) wherein the one or more processors (121) are further configured to detect the duplicate probe requests from the station (215);
(ii) wherein the one or more processors (121) are further configured to prioritize the probe response based on a priority value associated with the probe request, wherein the priority value includes at least one of a low priority value, a normal priority value, or a high priority value.
